# EUROPEAN PATENT APPLICATION

(11) **EP 4 718 607 A1**
(43) Date of publication of application: **01.04.2026**
(21) Application number: 24814188.9
(22) Date of filing: 16.05.2024
(51) Int. Cl.: H01M 50/244

(54) **BATTERY PACK AND VEHICLE**

(30) Priority: 31.05.2023 CN 202321382565 U
(71) Applicant: BYD Company Limited, Shenzhen, Guangdong 518118 (CN)
(72) Inventor: ZHENG, Jianwu, Shenzhen, Guangdong 518118 (CN); WU, Xiangang, Shenzhen, Guangdong 518118 (CN); WANG, Yalei, Shenzhen, Guangdong 518118 (CN); WANG, Zhijie, Shenzhen, Guangdong 518118 (CN); LAI, Qing, Shenzhen, Guangdong 518118 (CN)
(74) Representative: Taor, Simon Edward William
(86) International application number: PCT/CN2024/093609
(87) International publication number: WO 2024/244988

(57) **Abstract**

A vehicle (1000) that includes a battery pack (100) is provided. The battery pack (100) includes a tray (20), a plurality of battery cells (23), a reinforcing member (30), and a thermal insulation member (40). The tray (20) includes a bottom plate (22), a side beam (28), and at least one support beam (21), the bottom plate (22) and the side beam (28) enclose an accommodating cavity (27), and the support beam (21) is disposed in the accommodating cavity (27). The plurality of battery cells (23) are disposed in the tray (20). The reinforcing member (30) is disposed in the accommodating cavity (27), the reinforcing member (30) is disposed at a bottom of the bottom plate (22), the reinforcing member (30) includes a plurality of reinforcing portions (31), the plurality of reinforcing portions (31) are spaced apart, and at least one reinforcing portion (31) is located at the support beam (21) and extends to a position below the battery cell (23). At least one thermal insulation protrusion (41) is disposed on the thermal insulation member (40), and the thermal insulation protrusion (41) is located in a gap between two adjacent reinforcing portions (31).

## Description

### CROSS-REFERENCE TO RELATED APPLICATIONS

This application claims priority to Chinese Patent Application No. 202321382565.1, filed with the China National Intellectual Property Administration on May 31, 2023 and entitled "BATTERY PACK AND VEHICLE", which is incorporated herein by reference in its entirety.

### TECHNICAL FIELD

This application relates to the field of battery technologies, and in particular, to a battery pack and a vehicle.

### BACKGROUND

Power batteries are core components of electric vehicles, and whether the power batteries have sufficient structural strength has an important influence on driving safety. In the conventional technology, a battery pack of a power battery includes an upper cover, a battery cell, and a tray, and a plurality of battery cells are disposed between the upper cover and the tray. The upper cover is usually made of a plastic material or a thin-walled stamped metal. After the upper cover is installed on the tray, structural strength of the battery pack in a width direction of the tray is low, and protection strength at a bottom of the battery pack is insufficient, which likely results in deformation of the battery pack under stress and low safety.

### SUMMARY

This application aims to resolve at least one of technical problems existing in the conventional technology. Therefore, a first objective of this application is to provide a battery pack to effectively improve structural strength and safety of a battery pack.

A second objective of this application is to provide a vehicle that includes the battery pack described in the foregoing embodiment.

A battery pack according to an embodiment of a first aspect of this application includes: a tray, a plurality of battery cells, a reinforcing member, and a thermal insulation member. The tray includes a bottom plate, a side beam, and at least one support beam, the bottom plate and the side beam enclose an accommodating cavity, and the support beam is disposed in the accommodating cavity. The plurality of battery cells are disposed in the accommodating cavity. The reinforcing member is disposed at a bottom of the bottom plate, the reinforcing member includes a plurality of reinforcing portions, the plurality of reinforcing portions are spaced apart, and at least one reinforcing portion is located at the support beam and extends to a position below the battery cell. At least one thermal insulation protrusion is disposed on the thermal insulation member, and at least one thermal insulation protrusion is located between two adjacent reinforcing portions.

According to the battery pack in this embodiment of this application, the support beam and the reinforcing member are disposed, to protect the battery cell. In this way, a force-bearing capability of the battery cell is effectively improved, to further improve a vibration mode and overall structural strength of the battery pack. In addition, the thermal insulation member is disposed, to improve a buffering and energy absorption effect of a bottom of the battery pack. In this way, the thermal insulation member cooperates with the support beam to jointly improve a capability of the battery pack to cope with external force, so that the battery pack can adapt to various complex working conditions. In addition, the thermal insulation part is disposed to perform thermal insulation for the battery pack, to improve overall thermal insulation performance of the battery pack.

In some embodiments, a plurality of gaps are formed between the plurality of reinforcing portions, a plurality of thermal insulation protrusions are disposed on a surface of the thermal insulation member, and the plurality of thermal insulation protrusions are disposed in the plurality of gaps in a one-to-one correspondence.

In some embodiments, the thermal insulation member further includes a flat plate portion and the at least one thermal insulation protrusion, the thermal insulation protrusion is disposed on a surface of the flat plate portion, and the flat plate portion is disposed on a bottom of the thermal insulation protrusion and a bottom of the reinforcing member.

In some embodiments, the tray includes a plurality of support beams, the plurality of support beams are spaced apart in a length direction of the tray, to divide the accommodating cavity into a plurality of sub-accommodating cavities, the plurality of battery cells are arranged in a width direction of the tray to form battery groups, a plurality of battery groups are arranged in the length direction of the tray, the plurality of battery groups are respectively disposed in at least a part of the plurality of sub-accommodating cavities, and the reinforcing portion is separately disposed at the plurality of support beams.

In some embodiments, the reinforcing member further includes: a first connecting portion and a second connecting portion. The first connecting portion is connected to one end of the plurality of reinforcing portions, the second connecting portion is connected to the other end of the plurality of reinforcing portions, the first connecting portion includes at least one first connecting section, and the second connecting portion includes at least one second connecting section.

In some embodiments, a length direction of the reinforcing portion is parallel to a width direction of the battery pack, and length directions of the first connecting portion and the second connecting portion are parallel to a length direction of the battery pack.

In some embodiments, the bottom plate includes: a heat exchange plate. The reinforcing member is disposed at a bottom of the heat exchange plate.

In some embodiments, at least one support member is disposed at one end that is of the side beam and that is close to the bottom plate, the support member extends toward a center of the bottom plate, and the bottom plate is disposed on the support member.

In some embodiments, the reinforcing member is welded to the side beam, and a surface of a side that is of the reinforcing member and that faces the bottom plate is bonded to the bottom plate.

In some embodiments, the reinforcing member is an extruded aluminum profile.

In some embodiments, a top of the tray is open, the battery pack further includes an upper cover, the upper cover is disposed on an open side of the tray, and at least one reinforcing plate is disposed on the top of the upper cover.

In some embodiments, two reinforcing plates are disposed on the upper cover, the two reinforcing plates are spaced apart in the width direction of the tray, the two reinforcing plates are respectively located on two side edges of the tray in the width direction, and the two reinforcing plates extend in the length direction of the tray.

In some embodiments, the reinforcing plate is a steel plate.

In some embodiments, the battery pack further includes an upper cover, the upper cover is disposed on an open side of the tray, the upper cover includes a steel plate and an insulation plate, and the insulation plate is disposed on a side that is of the steel plate and that is close to the accommodating cavity.

In some embodiments, the insulation plate is a glass fiber board.

In some embodiments, the top of the tray is open, the battery pack further includes an upper cover, the upper cover is disposed on an open side of the tray, an access port is provided on the upper cover, and a detachable access cover is disposed at the access port.

In some embodiments, a power distribution module is disposed in the accommodating cavity, and the access port and the power distribution module are disposed correspondingly.

In some embodiments, a sealing member is disposed between the access cover and the upper cover, and the sealing member is disposed around the access port.

In some embodiments, the access port is located at an edge of the upper cover, and a flange for shielding the sealing member is disposed on a side that is of the access cover and that is away from the center of the upper cover.

In some embodiments, the battery pack further includes: an insulation layer. The insulation layer is disposed on an inner wall surface that is of the tray and that faces the accommodating cavity.

In some embodiments, the battery pack further includes: a protection plate. The protection plate is disposed at a bottom of the thermal insulation member.

In some embodiments, a length direction of the support beam is parallel to the width direction of the battery pack, and a length direction of the battery cell is parallel to the length direction of the battery pack.

In some embodiments, the reinforcing portion extends to a position below one end of the battery cell in the length direction.

In some embodiments, a battery post is disposed at one end of the battery cell in the length direction.

In some embodiments, the plurality of reinforcing portions are spaced apart in the length direction of the tray.

A vehicle according to an embodiment of a second aspect of this application includes the battery pack of the foregoing embodiment of the first aspect of this application.

Additional aspects and advantages of this application are in part described in the following descriptions and in part become apparent in the following descriptions or are learned through practice of this application.

### BRIEF DESCRIPTION OF DRAWINGS

The above and/or additional aspects and advantages of this application become apparent and easily understood with the descriptions of embodiments with reference to the following drawings:
FIG. 1 is an exploded view of a battery pack according to an embodiment of this application;
FIG. 2 is a sectional view of a battery pack according to an embodiment of this application;
FIG. 3 is a bottom view of a reinforcing member according to an embodiment of this application;
FIG. 4 is a top view of an upper cover according to an embodiment of this application;
FIG. 5 is a diagram of a tray according to an embodiment of this application; and
FIG. 6 is a diagram of a vehicle according to an embodiment of this application.

### Reference numerals:

1000: vehicle, 100: battery pack;
10: upper cover, 11: access port, 12: access cover, 13: flange, 14: sealing member, 15: reinforcing plate;
20: tray, 21: support beam, 22: bottom plate, 25: heat exchange plate, 23: battery cell, 24: power distribution module, 26: insulation layer, 27: accommodating cavity, 28: side beam;
30: reinforcing member, 31: reinforcing portion, 32: first connecting portion, 321: first connecting section, 33: second connecting portion, 331: second connecting section;
40: thermal insulation member, 41: thermal insulation protrusion, 42: flat plate portion;
50: protection plate;
A: width direction, B: length direction, C: height direction.

### DESCRIPTION OF EMBODIMENTS

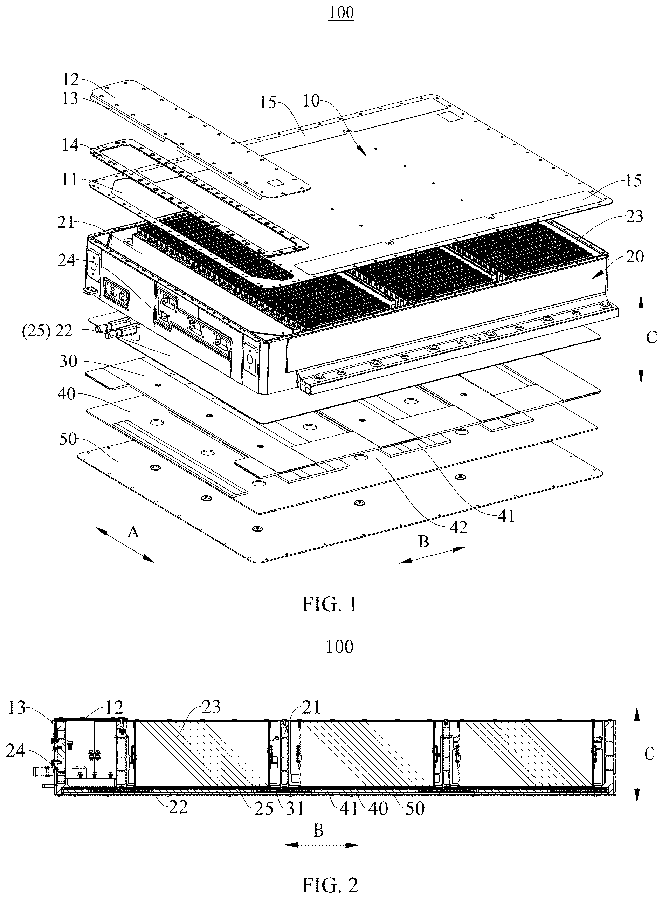

Embodiments of this application are described in detail below. Embodiments described with reference to the accompanying drawings are examples. The following describes a battery pack 100 according to an embodiment of this application with reference to FIG. 1 to FIG. 5. The battery pack 100 includes: a tray 20, a plurality of battery cells 23, a reinforcing member 30, and a thermal insulation member 40.

Specifically, as shown in FIG. 1 to FIG. 5, the tray 20 includes a bottom plate 22, a side beam 28, and at least one support beam 21. The bottom plate 22 and the side beam 28 enclose an accommodating cavity 27 suitable for accommodating a battery, the support beam 21 is disposed in the accommodating cavity 27, and the plurality of battery cells 23 are disposed in the accommodating cavity 27. End parts of the plurality of battery cells 23 are opposite to the support beam 21. The reinforcing member 30 is disposed at a bottom of the bottom plate 22, the reinforcing member 30 includes a plurality of reinforcing portions 31, and the plurality of reinforcing portions 31 are spaced apart. At least one reinforcing portion 31 is located at the support beam 21 and extends to a position below end parts of a plurality of battery cells 23. The thermal insulation member 40 is disposed on a side of the reinforcing member 30 in a height direction C of the battery pack 100, at least one thermal insulation protrusion 41 is disposed on a surface of the thermal insulation member 40, and at least one thermal insulation protrusion 41 is located between two adjacent reinforcing portions 31.

With reference to FIG. 1, FIG. 3, and FIG. 5, the bottom plate 22 is located at a bottom of the side beam 28, the side beam 28 is disposed perpendicular to the bottom plate 22, and the side beam 28 is disposed around the bottom plate 22 to form the upwardly open accommodating cavity 27. The support beam 21 extends in a width direction A of the battery pack 100, and supports the battery pack 100 in the height direction C of the battery pack 100. The plurality of battery cells 23 extend in a length direction B of the battery pack 100, and are sequentially disposed in the width direction A of the battery pack 100. When the battery cell 23 is installed in the battery pack 100, two ends of the battery cell 23 in the length direction B of the battery pack 100 are disposed opposite to the support beam 21. The reinforcing member 30 is disposed at the bottom of the bottom plate 22 in the height direction C of the battery pack 100, the reinforcing portion 31 extends in the width direction A of the battery pack 100, and the reinforcing portion 31 is opposite to the support beam 21 in the height direction C of the battery pack 100. The battery cell 23 abuts against the bottom plate 22, and the reinforcing portion 31 supports the support beam 21 and a plurality of battery cells 23 at the bottom of the bottom plate 22. The thermal insulation member 40 is disposed below the reinforcing member 30 in the height direction C of the battery pack 100, at least one thermal insulation protrusion 41 is disposed on a surface that is of a side of the thermal insulation member 40 and that faces the bottom plate 22, and the thermal insulation protrusion 41 is located between two adjacent reinforcing portions 31.

That at least one thermal insulation protrusion 41 is located between two adjacent reinforcing portions 31 may be understood as that, when a plurality of thermal insulation protrusions 41 are disposed on the thermal insulation member 40, one or more thermal insulation protrusions 41 are located between the two adjacent reinforcing portions 31, and when one thermal insulation protrusion 41 is disposed on the thermal insulation member 40, the thermal insulation protrusion 41 is located between the two adjacent reinforcing portions 31.

The thermal insulation protrusion 41 being located (in a gap) between the two adjacent reinforcing portions 31 does not mean that a size of the single thermal insulation protrusion 41 should be less than or equal to the gap between the two adjacent reinforcing portions 31. The size of the single thermal insulation protrusion 41 may be less than or equal to the gap between the two adjacent reinforcing portions 31, or may be slightly greater (for example, slightly higher) than the gap between the two adjacent reinforcing portions 31.

According to the battery pack 100 in this embodiment of this application, the reinforcing member 30 is disposed at the bottom of the bottom plate 22, and the support beam 21 is disposed opposite to the reinforcing portion 31, so that structural strength of the tray 20 can be effectively improved. A side surface of the reinforcing portion 31 extends to positions below end parts of a plurality of battery cells 23, and the reinforcing portion 31 is located in an area of largest stress on the battery cells 23, to effectively improve stress strength of the end part of the battery cell 23 in the length direction B, so that protection for the battery cell 23 is enhanced, and a vibration mode of the battery pack 100 is improved. In addition, the thermal insulation member 40 is usually of a porous structure with specific compression performance, and the thermal insulation member 40 may play a role of buffering and energy absorption for the battery pack 100 from the bottom of the battery pack 100, so that the reinforcing member 30 and the thermal insulation member 40 can jointly improve a capability of the battery pack 100 to respond to external force. In addition, the gap is provided between the reinforcing portions 31, so that strength can be ensured when a weight is reduced. The thermal insulation protrusion 41 is located between the adjacent reinforcing portions 31, so that the gap between the reinforcing portions 31 may be filled to some extent, to facilitate fastening between the reinforcing member 30, the thermal insulation member 40, and the bottom plate 22. In addition, the thermal insulation member 40 is disposed to perform a thermal insulation function for the battery pack 100, and thermal insulation performance of the entire battery pack 100 is improved.

According to the battery pack 100 in this embodiment of this application, as shown in FIG. 1 and FIG. 2, a plurality of gaps are formed between the plurality of reinforcing portions 31, a plurality of thermal insulation protrusions 41 are disposed on the surface of the thermal insulation member 40, and the plurality of thermal insulation protrusions 41 are disposed in the plurality of gaps in a one-to-one correspondence. The plurality of reinforcing portions 31 are spaced apart in the length direction B of the battery pack 100, and the gaps are formed between the adjacent reinforcing portions 31, the plurality of thermal insulation protrusions 41 extend in the length direction B of the battery pack 100, and the thermal insulation protrusions 41 are disposed in the gaps between the adjacent reinforcing portions 31. In some implementations, a surface of a side that is of the thermal insulation protrusion 41 and that is adjacent to the battery cell 23 may be flush with a surface of a side that is of the reinforcing portion 31 and that is adjacent to the battery cell 23, so that the thermal insulation protrusion 41 can be prevented from protruding from a surface of a side that is of the reinforcing member 30 and that is adjacent to the battery cell 23. Double-sided adhesive may be disposed on a side that is of the thermal insulation protrusion 41 and that is close to the tray 20 in the height direction C of the battery pack 100, and the thermal insulation protrusion 41 and the tray 20 are bonded together through the double-sided adhesive. In this way, the thermal insulation protrusions 41 are disposed in the plurality of gaps formed by the reinforcing portions 31 in a one-to-one correspondence, so that a gap between the thermal insulation protrusion 41 and the reinforcing portion 31 and the bottom of the tray 20 can be reduced, to facilitate fastening of the reinforcing member 30, and improve thermal insulation performance and sealing performance of the battery pack 100.

According to the battery pack 100 of this embodiment of this application, as shown in FIG. 1, the thermal insulation member 40 includes a flat plate portion 42 and the at least one thermal insulation protrusion 41, and the flat plate portion 42 is disposed at a bottom of the reinforcing member 30. The thermal insulation member 40 is disposed below the reinforcing member 30 in the height direction C of the battery pack 100, and the flat plate portion 42 is disposed below the thermal insulation protrusion 41 in the height direction C of the battery pack 100. In some implementations, the thermal insulation protrusion 41 and the tray 20 may be bonded together through the double-sided adhesive tape, and a side that is of the flat plate portion 42 and that is close to the tray 20 is connected to the bottom of the reinforcing member 30. In this way, the thermal insulation member 40 is disposed to perform a specific thermal insulation function for the battery pack 100, and thermal insulation performance of the entire battery pack 100 is improved. In addition, the thermal insulation member 40 is disposed on a side that is of the reinforcing member 30 and that is away from the tray 20. When the battery pack 100 experiences a collision from the bottom, the flat plate portion 42 on the thermal insulation member 40 may play a buffering role, to reduce collision force borne by the reinforcing member 30 and improve a protection capability. In this way, overall structural strength of the battery pack 100 is enhanced, and a service life of the battery pack 100 is prolonged.

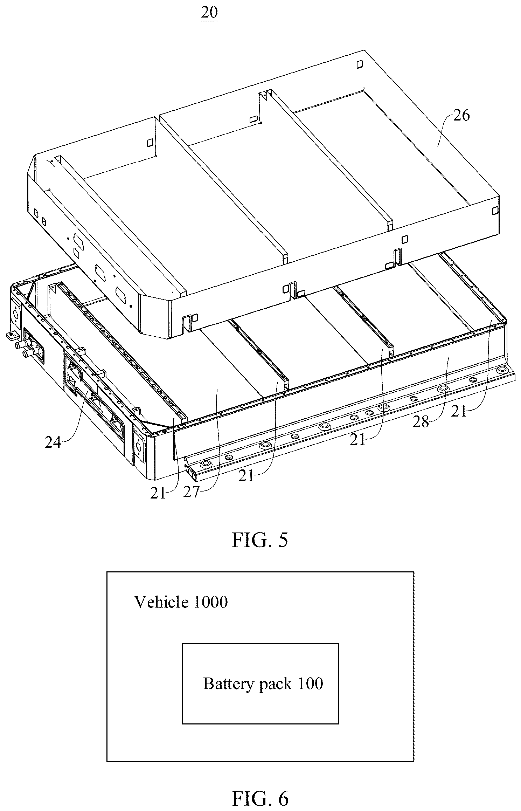

According to some embodiments of this application, as shown in FIG. 1 and FIG. 5, the tray 20 includes a plurality of support beams 21, and the plurality of support beams 21 are spaced apart in the length direction B of the tray 20, to divide the accommodating cavity 27 into a plurality of sub-accommodating cavities. The plurality of battery cells 23 are arranged in a width direction A of the tray 20 to form battery groups, a plurality of battery groups are arranged in a length direction B of the tray 20, and the plurality of battery groups are respectively disposed in at least a part of the plurality of sub-accommodating cavities. The reinforcing portion 31 is separately disposed at the plurality of support beams 21. The width direction A of the tray 20 is consistent with the width direction A of the battery pack 100, and the length direction B of the tray 20 is consistent with the length direction B of the battery pack 100. At least the part of the plurality of sub-accommodating cavities is configured for disposing of the battery cells 23, the plurality of reinforcing portions 31 are spaced apart in the length direction B of the battery pack 100 and extend in the width direction A of the battery pack 100, and the plurality of reinforcing portions 31 are opposite to the plurality of support beams 21. For example, the plurality of battery cells 23 form the plurality of battery groups, each battery group includes a plurality of battery cells 23, and the plurality of battery cells 23 in each battery group are evenly distributed, in the width direction A of the battery pack 100, in the sub-accommodating cavity formed through division of the accommodating cavity 27. One end or two ends of the battery cell 23 in the length direction B of the battery pack 100 are separately disposed adjacent to one adjacent support beam 21. In this way, the plurality of support beams 21 are spaced apart in the length direction B of the battery cells 23, so that the plurality of battery cells 23 can be evenly distributed in the accommodating cavity 27, and the plurality of battery cells 23 can be prevented from being deformed through pressing each other, and consequently affecting a service life of the battery pack 100. In addition, the plurality of support beams 21 can effectively strengthen structural strength of the tray 20, facilitate limiting of installation of the battery cell 23, and improve impact resistance and extrusion resistance strength of the battery pack 100.

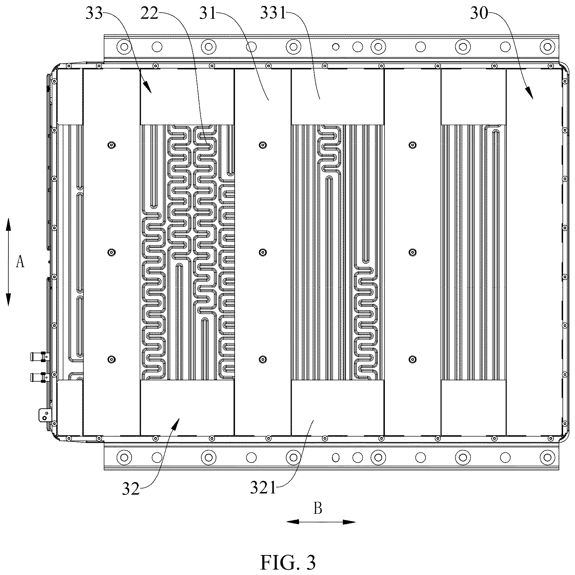

According to some embodiments of this application, as shown in FIG. 3, the reinforcing member 30 further includes: a first connecting portion 32 and a second connecting portion 33. The first connecting portion 32 is connected to one end of the plurality of reinforcing portions 31, and the second connecting portion 33 is connected to the other end of the plurality of reinforcing portions 31.

The first connecting portion 32 and the second connecting portion 33 each extend in the length direction B of the battery pack 100, and the first connecting portion 32 and the second connecting portion 33 are respectively located on two sides of the reinforcing member 30 in the width direction A of the battery pack 100. Two ends of the reinforcing portion 31 in the width direction A of the battery pack 100 are respectively connected to the first connecting portion 32 and the second connecting portion 33. The plurality of reinforcing portions 31, the first connecting portion 32, and the second connecting portion 33 enclose a plurality of rectangular through holes, and the thermal insulation protrusion 41 is fitted in the through hole. The reinforcing portion 31 is disposed on a side that is of the first connecting portion 32 and the second connecting portion 33 and that is adjacent to the battery cell 23 in the height direction C of the battery pack 100, to facilitate abutment of the reinforcing portion 31 against the support beam 21. The first connecting portion 32 and the second connecting portion 33 may be fastened to the plurality of reinforcing portions 31 through welding. The first connecting portion 32 includes at least one first connecting section 321, and the first connecting section 321 is connected between one end of two adjacent reinforcing portions 31. Alternatively, the second connecting portion 33 includes at least one second connecting section 331, and the second connecting section 331 is connected between the other end of two adjacent reinforcing portions 31. Alternatively, the first connecting portion 32 and the second connecting portion 33 respectively include a plurality of first connecting sections 321 and a plurality of second connecting sections 331. The plurality of first connecting sections 321 and the plurality of second connecting sections 331 are respectively disposed on two sides of the battery pack 100 in the width direction A, and are spaced apart in the length direction B of the battery pack 100. At least one first connecting section 321 and one second connecting section 331 are disposed between two adjacent reinforcing portions 31 and at two ends of the reinforcing portion 31 in the width direction A of the battery pack 100, and the plurality of first connecting sections 321 and the plurality of second connecting sections 331 are connected to the plurality of reinforcing portions 31. Certainly, if the first connecting portion 32 and the second connecting portion 33 respectively include one first connecting section 321 and one second connecting section 331, in this case, the first connecting portion 32 and the second connecting portion 33 are integral separately. The first connecting portion 32 is connected to one end of the plurality of reinforcing portions 31, and the second connecting portion 33 is connected to the other end of the plurality of reinforcing portions 31.

In this way, the first connecting portion 32 and the second connecting portion 33 are disposed on the two sides of the reinforcing member 30 in the width direction A of the battery pack 100 respectively, to facilitate disposing the reinforcing portion 31 on the first connecting portion 32 and the second connecting portion 33, so that the reinforcing portion 31 is supported. In this way, an extrusion resistance capability of the reinforcing member 30 on two sides of the battery pack 100 in the width direction A can be improved, to improve a deformation resistance capability of the battery pack 100 in the width direction A and further improve an extrusion resistance capability of the tray 20 on two sides in the width direction A, so that structural strength of the tray 20 is increased, the battery cell 23 in the tray 20 can be better protected, and a structure of the battery pack 100 is stabler.

According to some embodiments of this application, as shown in FIG. 1, a length direction of the reinforcing portion 31 is parallel to the width direction A of the battery pack 100, and length directions of the first connecting portion 32 and the second connecting portion 33 are parallel to the length direction B of the battery pack 100. The battery pack 100 has the width direction A, the length direction B, and the height direction C. The length direction of the reinforcing portion 31 is consistent with the width direction A of the battery pack 100, and the length direction of the first connecting portion 32 and the length direction of the second connecting portion 33 are consistent with the length direction B of the battery pack 100.

According to some embodiments of this application, as shown in FIG. 1, the bottom plate 22 includes a heat exchange plate 25. The reinforcing member 30 is disposed at a bottom of the heat exchange plate 25. The plurality of support beams 21 are spaced apart in the accommodating cavity 27 in the length direction B of the battery pack 100, the reinforcing member 30 is disposed below the heat exchange plate 25 in the height direction C of the battery pack 100, and the flat plate portion 42 of the thermal insulation member 40 is disposed below the reinforcing member 30. The thermal insulation protrusion 41 is disposed between the reinforcing portions 31, and a double-sided adhesive may be disposed on a surface of a side that is of the thermal insulation protrusion 41 and that is close to the tray 20 in the height direction C of the battery pack 100, to fasten the thermal insulation protrusion to the heat exchange plate 25. In other words, in the height direction C of the battery pack 100, the heat exchange plate 25, the reinforcing member 30, and the flat plate portion 42 of the thermal insulation member 40 are sequentially disposed from top to bottom, and the thermal insulation member 40 is in lap joint with the reinforcing member 30 on a surface of a side that is of the heat exchange plate 25 and that is away from the battery cell 23. For example, the heat exchange plate 25 is disposed between the battery cell 23 and the reinforcing member 30, and heat generated by the battery cell 23 in the battery pack 100 is exchanged with the heat exchange plate 25, so that the heat exchange plate 25 can take away the heat from the battery cell 23 to implement heat dissipation.

In this way, when a temperature of the battery cell 23 in the accommodating cavity 27 is excessively high, the heat exchange plate 25 functions to lower the temperature, and when the temperature of the battery cell 23 in the accommodating cavity 27 is excessively low, the heat exchange plate 25 functions to raise the temperature, so that the temperature of the battery cell 23 is maintained within a specific range, to prolong a service life of the battery cell 23. The reinforcing member 30 may improve a stone chip resistance capability of the bottom of the battery pack 100, and improve overall structural strength of the battery pack 100.

According to some embodiments of this application, as shown in FIG. 1 and FIG. 5, at least one support member is disposed at one end that is of the side beam 28 and that is close to the bottom plate 22, the support member extends toward a center of the bottom plate 22, and the bottom plate 22 is disposed on the support member. The side beam 28 is disposed perpendicular to the bottom plate 22, the support member is located at the lower end of the side beam 28 in the height direction C of the battery pack 100, and an edge of the bottom plate 22 abuts against the support member and is disposed above the support member in the height direction C of the battery pack 100. In this way, the support member is disposed, so that the bottom plate 22 is more firmly connected to the side beam 28, so that the bottom plate 22 is not likely to be detached from the side beam 28. This enhances structural strength of the tray 20, and further improves overall structural strength of the battery pack 100.

According to some embodiments of this application, as shown in FIG. 1 and FIG. 5, the reinforcing member 30 is welded to the side beam 28, and the surface of the side that is of the reinforcing member 30 and that faces the bottom plate 22 is bonded to the bottom plate 22. The heat exchange plate 25 and the side beam 28 may be formed through friction stir welding, to reduce production costs of the battery pack 100 and further improve overall strength of the battery pack 100. In this way, the edge of the reinforcing member 30 is welded to the side beam 28, so that the reinforcing member 30 can be more firmly connected to the side beam 28. In addition, the reinforcing member 30 and the bottom plate 22 are bonded through adhesive, to maximize bonding strength, so that a quantity of welds is reduced, deformation of the battery pack 100 that may occur due to welding is reduced, and an overall yield rate of the battery pack 100 is improved.

According to some embodiments of this application, as shown in FIG. 1, the reinforcing member 30 is an extruded aluminum profile. The extruded aluminum profile has advantages of good product mechanical performance, high production flexibility, a simple process procedure, and low production costs. The reinforcing member 30 is the extruded aluminum profile, so that production difficulty and production costs are reduced when structural strength of the reinforcing member 30 is ensured.

According to some embodiments of this application, as shown in FIG. 1, the top of the tray 20 is open, the battery pack 100 further includes an upper cover 10, the upper cover 10 is disposed on an open side of the tray 20, and at least one reinforcing plate 15 is disposed at the top of the upper cover 10. The upper cover 10 is disposed above the side beam 28 in the height direction C of the battery pack 100, and the reinforcing plate 15 is disposed above the upper cover 10 in the height direction C of the battery pack 100. In other words, the reinforcing plate 15, the upper cover 10, the tray 20, the reinforcing member 30, and the thermal insulation member 40 are disposed sequentially from top to bottom in the height direction C of the battery pack 100. In this way, the upper cover 10 can protect an upper portion of the battery pack 100 in the height direction C, and the reinforcing plate 15 is disposed, to enhance structural strength of the upper cover 10, protect the battery cell 23 in the battery pack 100, and prevent the upper cover 10 from being deformed after being squeezed and consequently being squeezed into the battery cell 23 in the battery pack 100.

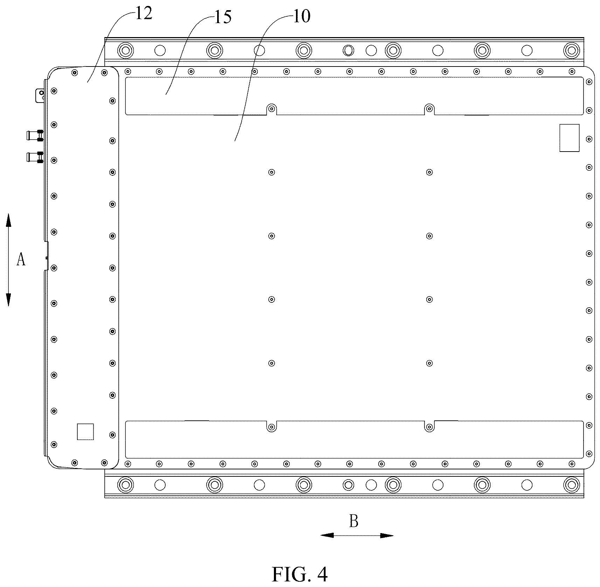

According to some embodiments of this application, as shown in FIG. 1 and FIG. 4, the plurality of reinforcing portions 31 are spaced apart in the length direction B of the tray 20, two reinforcing plates 15 are disposed on the upper cover 10, and the two reinforcing plates 15 are respectively located at two side edges of the tray 20 in the width direction A. Each reinforcing plate 15 extends in the length direction B of the battery cell 23. In other words, the reinforcing plate 15 extends in the length direction B of the battery pack 100, the reinforcing plate 15 is disposed above the upper cover 10 in the height direction C of the battery pack 100, and the two reinforcing plates 15 are respectively disposed on two sides of the upper cover 10 in the width direction A of the tray 20. In this way, the reinforcing plate 15 can effectively improve an extrusion resistance capability of two sides of the upper cover 10 in the width direction A of the battery pack 100, and improve an extrusion resistance capability of two sides of the battery pack 100 in the width direction A, to improve overall structural strength of the battery pack 100, so that the battery pack 100 adapts to a complex environment during use. For example, when the length direction B of the battery pack 100 is the same as a front-rear direction of the vehicle body, the two reinforcing plates 15 may be disposed to improve an impact resistance capability of the battery pack 100 in a left-right direction of the vehicle body, so that safety of the battery pack 100 is improved.

According to some embodiments of this application, the reinforcing plate 15 is a steel plate. The steel plate has advantages of high strength, high temperature resistance, high voltage resistance, and corrosion resistance, and the reinforcing plate 15 being the steel plate can help the battery pack 100 adapt to a harsh external environment, further improve overall structural strength of the battery pack 100, and prolong a service life of the battery pack 100.

According to some embodiments of this application, as shown in FIG. 1 and FIG. 4, the battery pack 100 further includes an upper cover 10, the upper cover 10 is disposed on an open side of the tray 20 and opposite to the accommodating cavity 27, and the upper cover 10 includes a steel plate and an insulation plate. The insulation plate is disposed on a side that is of the steel plate and that is close to the accommodating cavity 27. The insulation plate is disposed at a lower part of the upper cover 10 in the height direction C of the battery pack 100, and the steel plate is disposed at an upper part of the upper cover 10 in the height direction C of the battery pack 100. The steel plate and the insulation plate are hot pressed to form the upper cover 10. In this way, the steel plate and the insulation plate may be hot pressed, to be used as the upper cover 10, so that insulation performance of the battery pack 100 is effectively improved.

According to some embodiments of this application, the insulation plate is a glass fiber board. The glass fiber board has good electrical insulation performance, and an outer surface of the glass fiber board has high quality moisture-proof performance, and is suitable for a product with a high performance electronic insulation requirement. In this way, the insulation plate is the glass fiber board, so that insulation performance and waterproofness of the upper cover 10 can be effectively improved, and protection for the battery cell 23 in the battery pack 100 is enhanced.

According to some embodiments of this application, as shown in FIG. 1, the top of the tray 20 is open, the battery pack 100 further includes an upper cover 10, the upper cover 10 is disposed on an open side of the tray 20, an access port 11 is formed on the upper cover 10, and a detachable access cover 12 is disposed at the access port 11. In this way, the access port 11 is provided to facilitate maintenance of the battery pack when the battery pack 100 fails, and the access cover 12 is detachable, so that maintenance difficulty can be reduced and maintenance costs can be reduced.

According to some embodiments of this application, as shown in FIG. 1, a power distribution module 24 is disposed in the accommodating cavity 27, and the access port 11 and the power distribution module 24 are disposed correspondingly. For example, both the access port 11 and the power distribution module 24 may be disposed at one end of the battery pack 100 in the length direction B, and the access port 11 is provided opposite to the power distribution module 24, so that the access cover 12 can be flexibly detached, to facilitate maintenance of the power distribution module 24.

According to some embodiments of this application, as shown in FIG. 1, a sealing member 14 is disposed between the access cover 12 and the upper cover 10, and the sealing member 14 is disposed around the access port 11. In this way, the sealing member 14 is disposed on an outer periphery above the access port 11. The sealing member 14 is located between the access port 11 and the access cover 12, and is disposed around the access port 11, so that the access port 11 can be completely sealed, and sealing performance of the battery pack 100 can be effectively improved, to protect the power distribution module 24.

According to some embodiments of this application, as shown in FIG. 1, the access port 11 is located at an edge of the upper cover 10, and a flange 13 for shielding the sealing member 14 is disposed on a side that is of the access cover 12 and that is away from the center of the upper cover 10. The flange 13 is disposed on a side that is of the access cover 12 and that is away from the center of the battery pack 100 in the length direction B of the battery pack 100, and the flange 13 is bent toward the tray 20 in the height direction C of the battery pack 100. When the access cover 12 is assembled to seal the access port 11, the flange 13 can improve sealing performance of a connection between the access cover 12 and the access port 11. In this way, the flange 13 structure of the access cover 12 can protect the sealing member 14 when the battery pack 100 is exposed to water, and prevent the sealing member 14 from being impacted by sand and gravel in the water and consequently causing a sealing failure and damage to power distribution module 24.

According to some embodiments of this application, as shown in FIG. 5, the battery pack 100 further includes an insulation layer 26. The insulation layer 26 is disposed on an inner wall surface that is of the tray 20 and that faces the accommodating cavity 27. The insulation layer 26 may be formed on the inner wall surface of the tray 20 through brushing. The insulation layer 26 may be an epoxy coating, and the epoxy coating has excellent anti-corrosion performance, and also has excellent adhesion, weather resistance, water resistance, durability, and the like. In addition, the epoxy coating features convenient construction, solidification at room temperature, a simple construction process, and no site environment limitation. The epoxy coating can be prepared for immediate use, is used in a general construction method, and can be solidified to form a film at room temperature. In this way, the insulation layer 26 is sprayed to cover the inner wall surface of the tray 20, so that insulation performance of the tray 20 can be improved, and the battery cell 23 can be prevented from short-circuiting and arcing with the tray 20 when liquid leakage occurs due to loss.

According to some embodiments of this application, as shown in FIG. 1, the battery pack 100 further includes a protection plate 50. The protection plate 50 is disposed at a bottom of the thermal insulation member 40. The protection plate 50 is disposed below the thermal insulation member 40, and the protection plate 50 may be a high-strength steel plate sprayed with a nano coating, so that an anti-corrosion capability of the protection plate 50 is improved. In this way, disposing of the protection plate 50 can effectively improve a stone chip resistance capability of the bottom of the battery pack 100, to effectively improve overall structural strength of the battery pack 100.

According to some embodiments of this application, the reinforcing portion 31 extends to a position below one end of the battery cell 23 in the length direction. A battery post is disposed at the end of the battery cell 23 in the length direction. The plurality of reinforcing portions 31 are spaced apart in the length direction B of the tray 20.

According to some embodiments of this application, a length direction of the support beam 21 is parallel to the width direction A of the battery pack 100, and the length direction B of the battery cell 23 is parallel to the length direction B of the battery pack 100. In other words, the length direction of the support beam 21 is consistent with the width direction A of the battery pack 100, and the length direction of the battery cell 23 is consistent with the length direction of the battery pack 100.

A vehicle 1000 according to an embodiment of the second aspect of this application includes the battery pack 100 according to the embodiment of the first aspect of this application, as shown in FIG. 6.

According to the vehicle 1000 in this embodiment of this application, a collision resistance capability of the vehicle 1000 can be improved, and safety of the vehicle 1000 during use can be effectively improved.

In description of this application, it should be understood that an orientation or a position relationship indicated by the term "center", "longitudinal", "lateral", "length", "width", "thickness", "upper", "lower", "front", "rear", "left", "right", "vertical", "horizontal", "top", "bottom", "inside", "outside", "clockwise", "counterclockwise", "axial", "radial", "circumferential", or the like is an orientation or a position relationship shown in the accompanying drawings, and is merely intended to facilitate description and simplify description of this application, but is not intended to indicate or imply that a specified apparatus or element needs to have a specific orientation, be constructed in a specific orientation, and operate in a specific orientation. Therefore, such terms cannot be construed as a limitation on this application.

In description of this application, a "first feature" or a "second feature" may include one or more such features. In description of this application, "a plurality of" means two or more. In description of this application, that the first feature is "above" or "below" the second feature may be that the first feature is in direct contact with the second feature, or may be that the first feature is not in direct contact with the second feature but in contact with the second feature through another feature between the first feature and the second feature. In description of this application, that the first feature is "above", "over", or "on" the second feature may be that the first feature is right above or obliquely above the second feature, or merely mean that a horizontal height of the first feature is greater than that of the second feature.

In description of this specification, reference term such as "one embodiment", "some embodiments", "schematic embodiment", "example", "specific example", or "some examples" means that a specific feature, structure, material or characteristic described with reference to the embodiment or example is included in at least one embodiment or example of this application. In this specification, schematic representations of the foregoing terms do not necessarily refer to a same embodiment or example.

## Claims

1. A battery pack (100), comprising:
a tray (20), wherein the tray (20) comprises a bottom plate (22), a side beam (28), and at least one support beam (21), the bottom plate (22) and the side beam (28) enclose an accommodating cavity (27), and the support beam (21) is disposed in the accommodating cavity (27);
a plurality of battery cells (23), wherein the plurality of battery cells (23) are all disposed in the accommodating cavity (27);
a reinforcing member (30), wherein the reinforcing member (30) is disposed at a bottom of the bottom plate (22), the reinforcing member (30) comprises a plurality of reinforcing portions (31), the plurality of reinforcing portions (31) are spaced apart, and at least one of the reinforcing portions (31) is located at the support beam (21) and extends to a position below the battery cell (23); and
a thermal insulation member (40), wherein at least one thermal insulation protrusion (41) is disposed on the thermal insulation member (40), and at least one thermal insulation protrusion (41) is located between two adjacent reinforcing portions (31).

2. The battery pack (100) according to claim 1, wherein a plurality of gaps are formed between the plurality of reinforcing portions (31), a plurality of thermal insulation protrusions (41) are disposed on a surface of the thermal insulation member (40), and the plurality of thermal insulation protrusions (41) are disposed in the plurality of gaps in a one-to-one correspondence.

3. The battery pack (100) according to claim 1 or 2, wherein the thermal insulation member (40) comprises:
a flat plate portion (42); and
the at least one thermal insulation protrusion (41), wherein the thermal insulation protrusion (41) is disposed on a surface of the flat plate portion (42), and the flat plate portion (42) is disposed on a bottom of the thermal insulation protrusion (41) and a bottom of the reinforcing member (30).

4. The battery pack (100) according to any one of claims 1 to 3, wherein the tray (20) comprises a plurality of support beams (21), the plurality of support beams (21) are spaced apart in a length direction (B) of the tray (20), to divide the accommodating cavity (27) into a plurality of sub-accommodating cavities, the plurality of battery cells (23) are arranged in a width direction (A) of the tray (20) to form battery groups, a plurality of battery groups are arranged in the length direction (B) of the tray (20), and the plurality of battery groups are respectively disposed in at least a part of the plurality of sub-accommodating cavities; and
the reinforcing portion (31) is separately disposed at the plurality of support beams (21).

5. The battery pack (100) according to claim 4, wherein the reinforcing member (30) further comprises:
a first connecting portion (32), wherein the first connecting portion (32) is connected to one end of the plurality of reinforcing portions (31), and the first connecting portion (32) comprises at least one first connecting section (321); and
a second connecting portion (33), wherein the second connecting portion (33) is connected to the other end of the plurality of reinforcing portions (31), and the second connecting portion (33) comprises at least one second connecting section (331).

6. The battery pack (100) according to claim 5, wherein a length direction (B) of the reinforcing portion (31) is parallel to a width direction (A) of the battery pack (100), and length directions (B) of the first connecting portion (32) and the second connecting portion (33) are parallel to a length direction (B) of the battery pack (100).

7. The battery pack (100) according to any one of claims 1 to 6, wherein the bottom plate (22) comprises:
a heat exchange plate (25), wherein the reinforcing member (30) is disposed at a bottom of the heat exchange plate (25).

8. The battery pack (100) according to any one of claims 1 to 7, wherein at least one support member is disposed at one end that is of the side beam (28) and that is close to the bottom plate (22), the support member extends toward a center of the bottom plate (22), and the bottom plate (22) is disposed on the support member.

9. The battery pack (100) according to any one of claims 1 to 8, wherein the reinforcing member (30) is welded to the side beam (28), and a surface of a side that is of the reinforcing member (30) and that faces the bottom plate (22) is bonded to the bottom plate (22).

10. The battery pack (100) according to any one of claims 1 to 9, wherein the reinforcing member (30) is an extruded aluminum profile.

11. The battery pack (100) according to any one of claims 1 to 10, wherein a top of the tray (20) is open, the battery pack (100) further comprises an upper cover (10), the upper cover (10) is disposed on an open side of the tray (20), and at least one reinforcing plate (15) is disposed at the top of the upper cover (10).

12. The battery pack (100) according to claim 11, wherein two reinforcing plates (15) are disposed on the upper cover (10), the two reinforcing plates (15) are spaced apart in the width direction (A) of the tray (20), the two reinforcing plates (15) are respectively located on two side edges of the tray (20) in the width direction (A), and the two reinforcing plates (15) extend in the length direction (B) of the tray (20).

13. The battery pack (100) according to claim 11 or 12, wherein the reinforcing plate (15) is a steel plate.

14. The battery pack (100) according to any one of claims 1 to 10, wherein the battery pack (100) further comprises an upper cover (10), the upper cover (10) is disposed on an open side of the tray (20), the upper cover (10) comprises a steel plate and an insulation plate, and the insulation plate is disposed on one side that is of the steel plate and that is close to the accommodating cavity (27).

15. The battery pack (100) according to claim 14, wherein the insulation plate is glass fiber board.

16. The battery pack (100) according to any one of claims 1 to 10, wherein a top of the tray (20) is open, the battery pack (100) further comprises an upper cover (10), the upper cover (10) is disposed on an open side of the tray (20), an access port (11) is provided on the upper cover (10), and a detachable access cover (12) is disposed at the access port (11).

17. The battery pack (100) according to claim 16, wherein a power distribution module (24) is disposed in the accommodating cavity (27), and the access port (11) and the power distribution module (24) are disposed correspondingly.

18. The battery pack (100) according to claim 16 or 17, wherein a sealing member (14) is disposed between the access cover (12) and the upper cover (10), and the sealing member (14) is disposed around the access port (11).

19. The battery pack (100) according to any one of claims 16 to 18, wherein the access port (11) is located at an edge of the upper cover (10), and a flange (13) for shielding the sealing member (14) is disposed on a side that is of the access cover (12) and that is away from the center of the upper cover (10).

20. The battery pack (100) according to any one of claims 1 to 19, further comprising:
an insulation layer (26), wherein the insulation layer (26) is disposed on an inner wall surface that is of the tray (20) and that faces the accommodating cavity (27).

21. The battery pack (100) according to any one of claims 1 to 20, further comprising:
a protection plate (50), wherein the protection plate (50) is disposed at a bottom of the thermal insulation member (40).

22. The battery pack (100) according to any one of claims 1 to 21, wherein a length direction (B) of the support beam (21) is parallel to the width direction (A) of the battery pack (100); and
a length direction (B) of the battery cell (23) is parallel to the length direction (B) of the battery pack (100).

23. The battery pack (100) according to any one of claims 1 to 21, wherein the reinforcing portion (31) extends to a position below one end of the battery cell (23) in the length direction (B).

24. The battery pack (100) according to claim 23, wherein a battery post is disposed at one end of the battery cell (23) in the length direction (B).

25. The battery pack (100) according to any one of claims 1 to 24, wherein the plurality of reinforcing portions (31) are spaced apart in the length direction (B) of the tray (20).

26. A vehicle (1000), comprising the battery pack (100) according to any one of claims 1 to 25.
